# EUROPÄISCHE PATENTSCHRIFT

(11) **EP 3 218 121 B1**
(45) Veröffentlichungstag und Bekanntmachung des Hinweises auf die Patenterteilung: **29.04.2020**
(21) Anmeldenummer: 15790112.5
(22) Anmeldetag: 03.11.2015
(51) Int. Cl.: B06B 3/00, G01L 1/16, B29C 65/08

(54) **ULTRASCHALLBEARBEITUNGSSYSTEM MIT PIEZOKRAFTSENSOR**
ULTRASONIC PROCESSING SYSTEM HAVING A PIEZOELECTRIC FORCE SENSOR
SYSTÈME DE TRAITEMENT PAR ULTRASONS COMPRENANT UN CAPTEUR DE FORCE PIÉZOÉLECTRIQUE

(30) Priorität: 11.11.2014 DE 102014116474
(43) Veröffentlichungstag der Anmeldung: 20.09.2017
(73) Patentinhaber: Herrmann Ultraschalltechnik GmbH & Co. KG, 76307 Karlsbad (DE)
(72) Erfinder: VOGLER, Ulrich, 88690 Uhldingen-Mühlhofen (DE)
(74) Vertreter: WSL Patentanwälte Partnerschaft mbB
(86) Internationale Anmeldenummer: PCT/EP2015/075529
(87) Internationale Veröffentlichungsnummer: WO 2016/074983

(56) Entgegenhaltungen:
- EP-A1- 0 920 977
- EP-A2- 1 849 531
- WO-A1-2015/128236

## Beschreibung

Die vorliegende Erfindung betrifft eine Vorrichtung zum Ultraschallbearbeiten von Materialien mit einem Ultraschallbearbeitungssystem. Das Ultraschallbearbeitungssysteme weist einen Ultraschallgenerator, einen Konverter, eine Sonotrode sowie ein Gegenwerkzeug auf. In vielen Fällen ist zwischen Konverter und Sonotrode zusätzlich ein Amplitudentransformator angeordnet.

Der Ultraschallgenerator erzeugt eine elektrische Wechselspannung, welche mit Hilfe des Konverters in eine akustische Ultraschallschwingung umgewandelt wird, deren Frequenz derart an die Sonotrode angepasst ist, dass diese in eine Resonanzschwingung versetzt wird. Zur Bearbeitung der gewünschten Materialien werden diese zwischen Sonotrode einerseits und Gegenwerkzeug andererseits angeordnet. Die mit einer Ultraschallschwingung angeregte Sonotrode presst dann das Material auf das Gegenwerkzeug und bearbeitet es.

Insbesondere bei der Bearbeitung von Materialbahnen ist die Sonotrode und/oder das Gegenwerkzeug mit einer im Wesentlichen zylinderförmigen oder teilzylinderförmigen Siegelfläche ausgestattet und wird während der Bearbeitung um die Zylinderachse gedreht. Dabei stimmt in der Regel die Umfangsgeschwindigkeit der zylinderförmigen bzw. teilzylinderförmigen Siegelfläche mit der Materialvorschubgeschwindigkeit überein.

Häufig weist die Sonotrode und/oder das Gegenwerkzeug eine entsprechende Trägerfläche auf, die Strukturen aufweist, wie z.B. eine über die Trägerfläche vorstehende Erhebung. Die Oberseiten der Strukturen bilden dann die bezeichnete Siegelfläche. Bei der Bearbeitung des Materials wird die Struktur in das Material übertragen.

So kann beispielsweise die Erhebung länglich bzw. rippenförmig sein und sich in axialer Richtung auf der Siegelfläche erstrecken. Selbstverständlich sind auch andere Formen von Erhebungen, wie z.B. punktförmige oder kreisförmige Erhebungen möglich.

Im Folgenden wird die Erfindung am Beispiel einer am Gegenwerkzeug angebrachten Erhebung beschrieben. Es versteht sich jedoch, dass die Erhebung stattdessen oder zusätzlich an der Sonotrode angebracht sein kann. Selbstverständlich können auch eine Vielzahl von Erhebungen vorgesehen sein. Während der Bearbeitung erfolgt eine Versiegelung immer dann, wenn die schwingende Sonotrode über das Material eine Kraft auf die Erhebung ausübt.

Beispielsweise können mit länglichen, quer zu einer Materialbahn verlaufenden Erhebungen auf die beschriebene Weise Quersiegelnähte in Materialbahnen eingebracht werden. Immer dann, wenn die am Gegenwerkzeug angeordnete längliche Erhebung gegenüber der Sonotrode angeordnet ist, kommt es zu einer Ausbildung einer Quersiegelnaht.

Die Verwendung von Erhebungen führt jedoch auch dazu, dass sich die Kraft, die von der Sonotrode über das Material auf das Gegenwerkzeug ausgeübt wird, immer dann abrupt erhöht, wenn bei der Rotation des Gegenwerkzeuges eine Erhebung gegenüber der Sonotrode positioniert wird. Dadurch kommt es zu einer Ankopplung des Schwingsystems an das Gegenwerkzeug. Die Schwingung der Sonotrode wird dadurch gedämpft und die Eigenfrequenz der Sonotrode wird verändert.

Um ein möglichst gleichmäßiges Schweißergebnis zu erzielen, ist es notwendig, dass während des Schweißvorgangs, d.h. dann, wenn die Erhebung mit dem zu bearbeitenden Material in Kontakt tritt, eine konstante, vorgegebene Schweißkraft eingehalten wird. Da die Schweißkraft aufgrund von Materialdickenschwankungen aber auch aufgrund der thermischen Ausdehnung des Ultraschallschwingsystems, variieren kann, weisen die bekannten Systeme einen Kraftsensor auf, der mit Hilfe von Dehnungsmessstreifen die Kraft misst, die mit der Sonotrode oder dem Gegenwerkzeug auf die Materialbahn aufgebracht wird. Als Kraftsensor kann theoretisch auch eine Kraftmessdose oder ein Piezoelement genutzt werden, wie dies in der EP 0 920 977 beschrieben ist. Die gemessene Kraft kann dann mit dem gewünschten Soll-Wert verglichen werden und, falls eine Abweichung zwischen Ist- und Soll-Wert festgestellt wird, kann mittels einer Vorschubeinheit die Relativposition der Sonotrode gegenüber dem Gegenwerkzeug so angepasst werden, dass die Schweißkraft erhöht oder erniedrigt wird, je nachdem wie die Abweichung zwischen Ist-Wert und Soll-Wert ausgefallen ist.

Die Regelung ist dabei in der Lage auf allmähliche Veränderungen des Systems, beispielsweise auf Temperaturänderungen und der damit verbundenen Längenänderung der Sonotrode sehr zuverlässig zu reagieren.

Der Regelung sind jedoch insbesondere bei abrupten Veränderungen Grenzen gesetzt. Insbesondere bei Lastwechseln, d.h. immer dann, wenn die Erhebung mit dem Material in Bearbeitungseingriff gerät, ändert sich die Schweißkraft abrupt.

In der DE 10 2006 020 417 ist daher bereits vorgeschlagen worden, eine Prozessgröße aus dem Bearbeitungsprozess zu ermitteln und die derart ermittelte Prozessgröße mit der Stellgröße der Regelung zu verknüpfen.

Beispielsweise kann die Prozessgröße die Kraft der Sonotrode auf das Material sein, die in der Regel proportional zur Bearbeitungskraft der Sonotrode ist. Wird während des Betriebes festgestellt, dass die Auslenkung bzw. die Bearbeitungskraft der Sonotrode ansteigt, was insbesondere dann der Fall sein wird, wenn die Erhebung in Bearbeitungseingriff gerät, so wird die Änderung gegebenenfalls nach geeigneter Skalierung auf die Stellgröße aufaddiert. Dadurch kann die Störung der Schwingungsamplitude aufgrund von Lastwechseln deutlich reduziert werden.

Allerdings kommt es dennoch zu Schwankungen der Schwingungsamplitude. So treten nachdem die Erhebung mit dem Material in Eingriff getreten ist, aber auch nachdem die Erhebung wieder außer Eingriff getreten ist Nachschwingungen auf. Dies liegt im Wesentlichen daran, dass durch die abrupte Lasterhöhung oder -erniedrigung und der damit verbundenen abrupten elastischen Verformung oder Relaxation der Halterung der Sonotrode einschließlich der Vorschubeinheit und einschließlich des auf Dehnungsmessstreifen basierenden Sensors die Sonotrode eine gedämpfte Schwingung um ihre Ruhelage durchführt.

Insbesondere dann, wenn kurz hintereinander zwei Quersiegelnähte erzeugt werden sollen, d. h. zwei axial verlaufende Erhebungen auf dem Gegenwerkzeug angeordnet sind, kann die damit verbundenen Schweißtaktfrequenz in einer Größenordnung liegen, in der auch die Halterung eine Resonanz zeigt.

Eine nicht-optimale Schweißkraft und damit ein nicht-akzeptables Schweißergebnis ist die Folge.

Der Erhöhung der Bearbeitungsgeschwindigkeit ist daher durch die Elastizität des Halterungssystems eine Grenze gesetzt.

Ausgehend von dem beschriebenen Stand der Technik ist es daher Aufgabe der vorliegenden Erfindung, eine entsprechende Ultraschallbearbeitungsvorrichtung bereitzustellen, die eine größere Bearbeitungsgeschwindigkeit erlaubt.

Erfindungsgemäß wird diese Aufgabe dadurch gelöst, dass der Kraftsensor ein piezoelektrischer Sensor ist. Die Steifigkeit von Piezosensoren im Vergleich zu den auf Dehnungsmessstreifen basierenden Kraftsensoren ist um einen Faktor 70 bis 100 größer.

Allein durch die Verwendung von Piezosensoren an Stelle von Kraftmesssensoren auf Dehnungsmessstreifenbasis kann daher die Elastizität des Systems und damit das Nachschwingen der Sonotrode erheblich reduziert werden.

Die Piezosensoren gelten jedoch als ungeeignet für statische Kraftmessungen, da es aufgrund des Aufbaus der Piezosensoren bzw. der Verwendung eines Ladungsverstärkers zur Messung der vom Piezokristall bereitgestellten Ladung immer zu einer Entladung kommt, sodass die von dem Ladungsverstärker gemessene Ladung, die in eine elektrische Spannung umgewandelt wird, bei statischen Messungen abnimmt.

Daher verzichten die Ultraschallbearbeitungsvorrichtungen des Standes der Technik in der Praxis auf die Verwendung von Piezosensoren als Kraftmesser.

Um die Piezosensoren dennoch verwenden zu können, ist erfindungsgemäß weiterhin eine Steuerungsvorrichtung vorgesehen, die entweder, wenn das Ultraschallbearbeitungssystem keine Materialbearbeitung durchführt, den piezoelektrischen Sensor kurzschließt, oder zu der von dem Piezosensor gemessenen Kraft einen zeitlich variierenden Kraftkompensationswert addiert.

So ist es beispielsweise möglich, ab und an die Piezosensoren kurzzuschließen, und zwar in einem Moment, in dem die Erhebungen nicht im Materialeingriff sind, d.h. in einem Moment, in dem keine Verschweißung stattfindet. In diesem Moment übt die Sonotrode keine oder lediglich eine geringe Kraft auf die Materialbahn auf. Durch das Kurzschließen wird der Piezosensor sozusagen genullt, sodass nach dem Kurzschlussvorgang lediglich Kraftänderungen gemessen werden können. Es hat sich jedoch gezeigt, dass es bei dem Betrieb der Ultraschallbearbeitungsvorrichtung tatsächlich weniger auf die Messung eines exakten Kraftwertes ankommt - dieser wird beim Start der Bearbeitung einmalig eingestellt -, sondern hauptsächlich auf die Messung von Kraftdifferenzen.

In ähnlicher Weise kann stattdessen auch ein zeitlich variierender Kraftkompensationswert auf die vom Ladungsverstärker bereitgestellte Spannung aufaddiert werden. Weiß man beispielsweise, dass bei Raumtemperatur der verwendete Piezosensor eine Drift von etwa 48 N/h aufweist, so kann eine entsprechend ansteigender Kraftkompensationswert aufaddiert werden.

Dadurch wird das vom Piezosensor abgegebene Signal korrigiert, um einen möglichst genauen Messwert zu erhalten.

Durch die beschriebene Maßnahme ist es nun möglich, Piezosensoren zur Kraftmessung in Ultraschallbearbeitungsvorrichtungen zu verwenden und dabei von der im Vergleich zu Dehnungssensoren hohen Steifigkeit zu profitieren.

In einer besonders bevorzugten Ausführungsform weisen Sonotrode und/oder Gegenwerkzeug eine im Wesentlichen zylinderförmige Trägerfläche mit mindestens einer Erhebung auf und sind drehbar, sodass sich die Erhebung während der Bearbeitung um die Drehachse dreht und während einer Siegelzeit mit der Materialbahn in Berührung kommt, wobei eine Triggereinrichtung vorgesehen ist, welche die Position der Erhebung bestimmt, wobei die Steuerungsvorrichtung derart eingerichtet ist, dass die in Abhängigkeit von der Positionsbestimmung den piezoelektrischen Sensor kurzschließt.

Beispielsweise kann die Steuervorrichtung derart ausgebildet sein, dass sie den piezoelektrischen Sensor kurzschließt, wenn die Erhebung nicht mit dem zu bearbeitenden Material in Kontakt tritt.

Es versteht sich, dass ein Kurzschließen nicht jedes Mal erfolgen muss, wenn die Erhebung mit dem zu bearbeitenden Material außer Eingrifft tritt.

So könnte beispielsweise in einer bevorzugten Ausführungsform vorgesehen sein, dass die Steuereinrichtung derart ausgebildet ist, dass sie den piezoelektrischen Sensor immer dann kurzschließt, wenn es aus irgendwelchen Gründen zu einer Bearbeitungsunterbrechung, z. B. aufgrund einer Störung oder eines Materialrollenwechsels, kommt.

Auch könnte in einer bevorzugten Ausführungsform vorgesehen sein, dass die Steuervorrichtung derart ausgebildet ist, dass sie den piezoelektrischen Sensor kurzschließt, wenn eine vorgegebene Zeitdauer nach dem letzten Kurzschließen abgelaufen ist.

Selbstverständlich sollte das Kurzschließen dann erfolgen, wenn die Erhebung nicht mit dem zu bearbeitenden Material in Kontakt ist. Falls das Gegenwerkzeug derart viele Erhebungen aufweist, dass prinzipiell zu jedem Zeitpunkt eine Erhebung mit der Materialbahn in Kontakt tritt, wird vorzugsweise die Sonotrode für den Kurzschlußvorgang von der Materialbahn wegbewegt, so dass keine Kraft am piezoelektrischen Sensor anliegt.

Alternativ dazu könnte die Steuervorrichtung auch derart ausgebildet sein, dass sie den piezoelektrischen Sensor kurzschließt, wenn die Triggervorrichtung eine vorgegebene Anzahl von Kontakten zwischen Material und Erhebung registriert hat.

In einer weiteren bevorzugten Ausführungsform ist vorgesehen, dass die Steuervorrichtung sowohl den piezoelektrischen Sensor ab und an kurzschließt, als auch einen zeitlich variierenden Kraftkompensationswert zu dem vom Piezosensor gemessenen Kraftwert addiert. Durch diese Maßnahme kann der Zeitabstand zwischen den einzelnen Kurzschlüssen vergrößert werden. Immer dann, wenn ein Kurzschluss erfolgt ist, wird der Kraftkompensationswert wieder auf Null gesetzt. Der Kraftkompensationswert berücksichtigt dann, dass es ab dem Zeitpunkt des Kurzschlusses zu einer Drift kommt. In der Regel wird durch diese Maßnahme eine lineare Kraftkompensation der Drift ausreichen. Zwar ist die Drift nichtlinear, jedoch kann innerhalb kurzer Zeiten nach dem Kurzschließen des Piezosensors eine lineare Kompensation für die Zwecke der vorliegenden Erfindung ausreichend sein. Der Kraftkompensationswert kann beispielsweise aus einer vorher durchgeführten Messung der Drift des piezoelektrischen Sensors abgeleitet sein.

Weitere Vorteile, Merkmale und Anwendungsmöglichkeiten der vorliegenden Erfindung werden deutlich anhand der folgenden Beschreibung einer bevorzugten Ausführungsform und der zugehörigen Figur. Es zeigt:

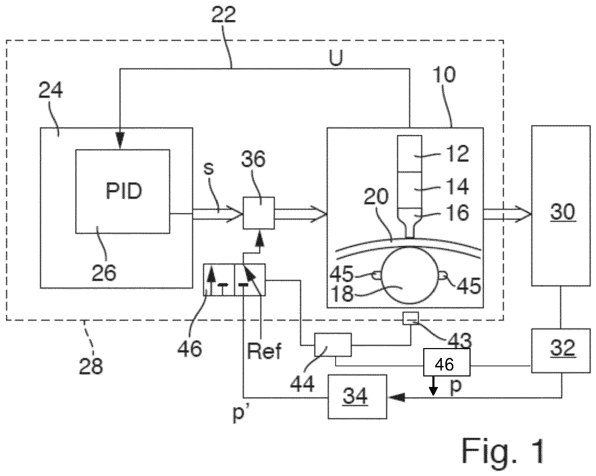

Figur 1: eine schematische Darstellung einer erfindungsgemäßen Vorrichtung.

Die Figur 1 zeigt ein Schaubild einer erfindungsgemäßen Ultraschallbearbeitungsvorrichtung. Diese weist ein Bearbeitungssystem 10 auf, welches einen Konverter 12, einen Amplitudentransformator 14, eine Ultraschallsonotrode 16 und ein Gegenwerkzeug 18 aufweist. Dabei bilden Konverter 12, Amplitudentransformator 14 und Gegenwerkzeug 18 ein Schwingsystem. Zwischen Sonotrode 16 und Gegenwerkzeug 18 ist das zu bearbeitende Material 20, wie z.B. eine Materialbahn angeordnet. Der Konverter 12 wird mittels eines Ultraschallgenerators (nicht gezeigt) mit einer Wechselspannung versorgt. Dem Bearbeitungssystem 10 werden Signale (u) entnommen, die über eine Rückführstrecke 22 einer Regeleinrichtung 24 zugeführt werden: Diese Regeleinrichtung 24 weist einen PID-Regler 26 auf. Die Regeleinrichtung 24 erzeugt eine Stellgröße (s), welche dem Bearbeitungssystem 10 und insbesondere dem Konverter 12 zugeführt wird. Das Bearbeitungssystem 10 mit der Regeleinrichtung 24 bildet einen geregelten elektrischen und mechanischen Schwingkreis 28. Die Regeleinrichtung 24 kann in den Ultraschallgenerator integriert sein.

Mit der Bezugszahl 30 ist ein Bearbeitungsprozess, insbesondere ein Schweißprozess bezeichnet, der außerhalb des Schwingkreises 28 liegt, da er nicht direkt von den elektrischen und mechanischen Größen beeinflusst wird. Dieser Bearbeitungsprozess 30 ist mit einem Kraftsensor 32 verbunden, mit welchem der Verlauf der Schweißkraft ermittelt wird. Erfindungsgemäß ist dieser Kraftsensor 32 als Piezosensor ausgebildet. Der Kraftsensor 32 ermittelt eine Prozessgröße (p), die einer Skaliereinheit 34 zugeführt wird. Dies Skaliereinheit 34 liefert eine skalierte Prozessgröße (p'), die einer Verknüpfungsstelle zugeführt wird. Diese Verknüpfungsstelle 36 befindet sich zwischen der Regeleinrichtung 24 und dem Bearbeitungssystem 10, sodass nicht nur die skalierte Prozessgröße (p'), sondern auch die Stellgröße (s) der Verknüpfungsstelle 36 zugeführt wird. Die miteinander verknüpften Größen (p') und (s) werden dem Bearbeitungssystem 10 und insbesondere dem Ultraschallgenerator zugeführt.

Wie man erkennt, ist die Trägerfläche des walzenförmigen Gegenwerkzeuges 18 zwei gegenüberliegende Erhebungen 45 aufweist, die die Siegelfläche bilden. Dies können beispielsweise längliche Rippen sein, die in axialer Richtung angeordnet sind. Bei der Bearbeitung der Materialbahn 20 wird das Gegenwerkzeug 18 um seine Achse gedreht, sodass die beiden Erhebungen 45 nacheinander mit der Materialbahn 20 in Kontakt treten und dann, wenn die Materialbahn zwischen Sonotrode 16 und Erhebung 45 eingeklemmt ist, für die Erzeugung einer Quersiegelnaht sorgen.

Immer dann, wenn einer der beiden Vorsprünge 45 über die Materialbahn 20 auf die Sonotrode 16 gepresst wird, wird dies dazu führen, dass über den Kraftsensor 32 eine abrupte Veränderung der Kraft gemessen wird. Wenn sich jedoch die Schweißkraft erhöht, muss die Sonotrode eine entsprechende Gegenkraft zur Verfügung stellen, d.h. es kommt zu einer geringfügigen elastischen Verformung des Sonotrodenhalters, der mit dem Sonotrodenhalter verbundenen Vorschubeinheit (nicht gezeigt) sowie mit dem innerhalb der Kraftstrecke angeordneten Drucksensors. Sobald die Erhebung 45 nicht mehr auf die Sonotrode 16 drückt, wird die Sonotrode sich wieder in ihre ursprüngliche Position zurückbewegen.

Aufgrund der beschriebenen elastischen Eigenschaft u.a. des Kraftsensors, wird dies jedoch zu einem Überschwingen führen, sodass der zeitliche Verlauf der Schweißkraft die Form einer gedämpften Schwingung aufweist. Da die Schweißkraft über den Kraftsensor 32 jedoch kontinuierlich gemessen wird, wird im Stand der Technik die geänderte Schweißkraft auch über die Verknüpfungsstelle 36 ununterbrochen zugeführt, sodass auch dann, wenn die Erhebung 45 nicht in Kontakt mit der Materialbahn 20 ist, die gedämpfte Schwingung als skalierte Prozessgröße p' der Verknüpfung 36 zugeführt wird und die Regelung beeinflusst. Erfindungsgemäß ist daher eine Triggereinrichtung 44 vorgesehen, welche mit Hilfe eines Positionssensors 43 die Position der Erhebung 45 bestimmt und in Abhängigkeit von der Bestimmung die Steuervorrichtung den Piezosensor kurzschließt, wobei bei dieser Ausführungsform zusätzlich der Schalter 46 betätigt wird, sodass die Verknüpfungsstelle 36 entweder mit der skalierten Prozessgröße p' oder mit einem konstanten Referenzwert REF verbunden ist.

In dieser Ausführungsform ist die Verknüpfungsstelle 36 immer dann mit dem konstanten Referenzwert REF verbunden, wenn die Erhebungen 45 keine Kraft mehr auf die Sonotrode 16 ausüben. Im Grunde genommen kann zur gleichen Zeit der Piezosensor kurzgeschlossen werden. Jegliche Veränderungen der Schweißkraft, die ohne Einflussnahme durch die Erhebungen 45 erfolgt, erfolgen nicht abrupt und können mit Hilfe der Regeleinrichtung 24 ausgeregelt werden. Dabei wird der Referenzwert so festgelegt, dass er der skalierten Prozessgröße p' entspricht, die der unmittelbar vor die Verknüpfung mit dem Prozesswert erfolgt, gemessenen Größe entspricht.

Erfindungsgemäß ist hier eine Steuervorrichtung 46 vorgesehen, die mit der Triggereinrichtung 44 verbunden ist. Die Steuereinrichtung 46 schließt den als Piezosensor ausgebildeten Kraftsensor 32 immer dann kurz, wenn die Triggereinrichtung signalisiert, dass die Erhebung 45 nicht mit der Materialbahn 20 in Kontakt ist. Nach dem Kurzschließen wird dem vom Kraftsensor 32 bereitgestellten Messsignal ein zeitlich variierender Kompensationskraftwert hinzugefügt, um die intrinsische Drift des Piezosensors zwischen zwei Kurzschlußvorgängen zu kompensieren.

### Bezugszeichenliste

- 10: Bearbeitungssystem
- 12: Konverter
- 14: Amplitudentransformator
- 16: Ultraschallsonotrode
- 18: Gegenwerkzeug
- 20: Materialbahn
- 22: Rückführstrecke
- 24: Regeleinrichtung
- 26: PID-Regler
- 28: Schwingkreis
- 30: Bearbeitungsprozess, Schweißprozess
- 32: Kraftsensor
- 34: Skaliereinheit
- 36: Verknüpfungsstelle
- 43: Positionssensor
- 44: Triggereinrichtung
- 45: Erhebung
- 46: Steuereinrichtung
- REF: Referenzwert
- u: Signale
- p: Prozessgröße
- p': skalierte Prozessgröße

## Patentansprüche

1. Vorrichtung zum Ultraschallbearbeiten von Materialien mit einem Ultraschallbearbeitungssystem (10) bestehend aus einem Ultraschallgenerator, einem Konverter (12), einer Sonotrode (16) sowie einem Gegenwerkzeug (18) und einer Vorschubeinheit, mit der Sonotrode (16) und Gegenwerkzeug (18) aufeinander zu bewegt oder voneinander weg bewegt werden können, wobei als Kraftsensor (32) ein piezoelektrischer Sensor vorgesehen ist, mit dem die Kraft, die das Ultraschallbearbeitungssystem (10) auf die zu bearbeitenden Materialien ausübt, gemessen werden kann, **dadurch gekennzeichnet, dass**, der Ausgang des Kraftsensors (32) mittels eines Ladungsverstärkers in eine elektrische Spannung umgewandelt wird, und dass eine Steuerungsvorrichtung (46) vorgesehen ist, die entweder, wenn das Ultraschallbearbeitungssystem (10) keine Materialbearbeitung durchführt, den piezoelektrischen Sensor kurzschließt, oder zu dem vom piezoelektrischen Sensor gemessenen Wert einen zeitlich variierenden Kraftkompensationswert addiert.

2. Vorrichtung nach Anspruch 1, **dadurch gekennzeichnet, dass** Sonotrode (16) und/oder Gegenwerkzeug (18) eine im Wesentlichen zylinderförmige Trägerfläche mit mindestens einer Erhebung (45) aufweist und drehbar ist, so dass sich die Erhebung (45) während der Bearbeitung um die Drehachse dreht und während einer Siegelzeit mit der Materialbahn (20) in Berührung kommt, wobei eine Triggereinrichtung (44) vorgesehen ist, welche die Position der Erhebung (45) bestimmt, wobei die Steuerungsvorrichtung (46) derart eingerichtet ist, dass sie in Abhängigkeit von der Positionsbestimmung den piezoelektrischen Sensor kurzschließt.

3. Vorrichtung nach Anspruch 2, **dadurch gekennzeichnet, dass** die Steuervorrichtung (46) derart ausgebildet ist, dass sie den piezoelektrischen Sensor kurzschließt, wenn die Erhebung (45) nicht mit dem zu bearbeitenden Material in Kontakt tritt.

4. Vorrichtung nach Anspruch 3, **dadurch gekennzeichnet, dass** die Steuervorrichtung (46) derart ausgebildet ist, dass sie den piezoelektrischen Sensor kurzschließt, wenn eine vorgegebene Zeitdauer abgelaufen ist.

5. Vorrichtung nach Anspruch 3, **dadurch gekennzeichnet, dass** die Steuervorrichtung (46) derart ausgebildet ist, dass sie den piezoelektrischen Sensor kurzschließt, wenn die Triggervorrichtung (44) eine vorgegebene Anzahl von Kontakten zwischen Material und Erhebung (45) registriert hat.

6. Vorrichtung nach einem der Ansprüche 1 bis 5, **dadurch gekennzeichnet, dass** die Steuerungsvorrichtung (46) sowohl, wenn das Ultraschallbearbeitungssystem (10) keine Materialbearbeitung durchführt, den piezoelektrischen Sensor kurzschließt, als auch zu dem vom piezoelektrischen Sensor gemessenen Wert einen zeitlich variierenden Kraftkompensationswert addiert.

7. Vorrichtung nach Anspruch 1 oder 6, **dadurch gekennzeichnet, dass** der Kraftkompensationswert aus einer vorher durchgeführten Messung der Drift des piezoelektrischen Sensor abgeleitet ist.

## Claims

1. Apparatus for ultrasonic processing of materials having an ultrasonic processing system (10) comprising an ultrasound generator, a converter (12), a sonotrode (16) and a counterpart tool (18) and a feed unit with which the sonotrode (16) and the counterpart tool (18) can be moved towards each other or away from each other, wherein there is provided a piezoelectric sensor as a force sensor (32) with which the force that the ultrasonic processing system (10) exerts on the materials to be processed can be measured, **characterised in that** the output of the force sensor (32) is converted into an electrical voltage by means of a charge amplifier and that there is provided a control device (46) which either when the ultrasonic processing system (10) is not performing material processing short-circuits the piezoelectric sensor or adds a time-varying force compensation unit to the value measured by the piezoelectric sensor.

2. Apparatus as set forth in claim 1 **characterised in that** the sonotrode (16) and/or the counterpart tool (18) have a substantially cylindrical carrier surface having at least one raised portion (45) and is rotatable so that during processing the raised portion (45) rotates about the axis of rotation and during a sealing time comes into contact with the material web (20), wherein there is provided a trigger device (44) which determines the position of the raised portion (45), wherein the control device (46) is so adapted that it short-circuits the piezoelectric sensor in dependence on position determination.

3. Apparatus as set forth in claim 2 **characterised in that** the control device (46) is so adapted that it short-circuits the piezoelectric sensor when the raised portion (45) is not in contact with the material to be processed.

4. Apparatus as set forth in claim 3 **characterised in that** the control device (46) is so adapted that it short-circuits the piezoelectric sensor when a predetermined period of time has expired.

5. Apparatus as set forth in claim 3 **characterised in that** the control device (46) is so adapted that it short-circuits the piezoelectric sensor when the trigger device (44) has registered a predetermined number of contacts between the material and the raised portion (45).

6. Apparatus as set forth in one of claims 1 through 5 **characterised in that** the control device (46) both short-circuits the piezoelectric sensor when the ultrasonic processing system (10) is not performing any material processing and also adds a time-varying force compensation value to the value measured by the piezoelectric sensor.

7. Apparatus as set forth in claim 1 or claim 6 **characterised in that** the force compensation value is derived from a previously performed measurement of the drift of the piezoelectric sensor.

## Revendications

1. Dispositif destiné au traitement par ultrasons de matériaux, avec un système de traitement par ultrasons (10) constitué d'un générateur d'ultrasons, d'un convertisseur (12), d'une sonotrode (16) ainsi que d'un contre-outil (18) et d'une unité d'avancement au moyen de laquelle la sonotrode (16) et le contre-outil (18) peuvent être déplacés l'un vers l'autre ou éloignés l'un de l'autre, un capteur piézoélectrique faisant office de capteur de force (32) et permettant de mesurer la force que le système de traitement par ultrasons (10) exerce sur les matériaux à traiter, **caractérisé en ce que** la sortie du capteur de force (32) est convertie en une tension électrique au moyen d'un amplificateur de charge, et **en ce qu'**il est prévu un dispositif de commande (46) qui court-circuite le capteur piézoélectrique, lorsque le système de traitement par ultrasons (10) n'effectue pas de traitement de matériau, ou bien ajoute une valeur de compensation de force variant dans le temps à la valeur mesurée par le capteur piézoélectrique.

2. Dispositif selon la revendication 1, **caractérisé en ce que** la sonotrode (16) et/ou le contre-outil (18) présente(nt) une surface de support essentiellement cylindrique avec au moins une éminence (45) et peu(ven)t tourner de sorte que l'éminence (45) tourne autour de l'axe de rotation pendant le traitement et entre en contact avec la bande de matériau (20) pendant un temps de scellage, un dispositif de déclenchement (44) étant prévu qui détermine la position de l'éminence (45), le dispositif de commande (46) étant conçu de telle manière qu'il court-circuite le capteur piézoélectrique en fonction de la détermination de position.

3. Dispositif selon la revendication 2, **caractérisé en ce que** le dispositif de commande (46) est conçu de manière à court-circuiter le capteur piézoélectrique lorsque l'éminence (45) n'entre pas en contact avec le matériau à traiter.

4. Dispositif selon la revendication 3, **caractérisé en ce que** le dispositif de commande (46) est conçu de manière à court-circuiter le capteur piézoélectrique lorsqu'une période de temps prédéterminée est écoulée.

5. Dispositif selon la revendication 3, **caractérisé en ce que** le dispositif de commande (46) est conçu de manière à court-circuiter le capteur piézoélectrique lorsque le dispositif de déclenchement (44) a enregistré un nombre prédéterminé de contacts entre le matériau et l'éminence (45).

6. Dispositif selon l'une quelconque des revendications 1 à 5, **caractérisé en ce que**, lorsque le système de traitement par ultrasons (10) n'effectue pas de traitement de matériau, le dispositif de commande (46) court-circuite le capteur piézoélectrique et ajoute aussi une valeur de compensation de force variable dans le temps à la valeur mesurée par le capteur piézoélectrique.

7. Dispositif selon la revendication 1 ou 6, **caractérisé en ce que** la valeur de compensation de force est dérivée d'une mesure précédemment effectuée de la dérive du capteur piézoélectrique.
